# EUROPEAN PATENT SPECIFICATION

(11) **EP 4 235 394 B1**
(45) Date of publication and mention of the grant of the patent: **13.05.2026**
(21) Application number: 21895010.3
(22) Date of filing: 11.11.2021
(51) Int. Cl.: G06F 3/16, G06F 3/0481, G06F 3/04847, G06F 3/04883

(54) **VOLUME CONTROL METHOD AND ELECTRONIC DEVICE SUPPORTING SAME**
LAUTSTÄRKENSTEUERUNGSVERFAHREN UND ELEKTRONISCHE VORRICHTUNG ZUR UNTERSTÜTZUNG DAVON
PROCÉDÉ DE COMMANDE DE VOLUME ET DISPOSITIF ÉLECTRONIQUE LE PRENANT EN CHARGE

(30) Priority: 18.11.2020 KR 20200154909; 19.02.2021 KR 20210022720
(43) Date of publication of application: 30.08.2023
(73) Proprietor: Samsung Electronics Co., Ltd., Suwon-si, Gyeonggi-do 16677 (KR)
(72) Inventor: SONG, Taeyang, Suwon-si, Gyeonggi-do 16677 (KR); HEO, Changryong, Suwon-si, Gyeonggi-do 16677 (KR)
(74) Representative: Gulde & Partner
(86) International application number: PCT/KR2021/016437
(87) International publication number: WO 2022/108241

(56) References cited:
- KR-A- 20150 054 190
- KR-A- 20190 028 043
- KR-A- 20190 030 512
- US-A1- 2013 179 784
- US-A1- 2018 329 672
- US-A1- 2018 329 672
- US-A1- 2020 174 660
- US-A1- 2020 186 926

## Description

### [Technical Field]

Various embodiments of this document relate to a method for controlling volume and an electronic device supporting the same.

### [Background Art]

An electronic device (e.g., a smartphone) may divide a display area of a display into a plurality of display areas (e.g., a multi-window) and display execution screens of applications the respective display areas. In addition, the electronic device may output audio data included in the application corresponding to the execution screen of each of the plurality of display areas, based on the volume configured in the application.

US 2020/186926 Al discloses an electronic device which may provide a user interface of displaying an execution screen of a first application in a first window arranged at a left side, and displaying an execution screen of a second application in a second window arranged at a right side, wherein an audio output path may be set wherein a first audio signal corresponding to the first application is outputted to a right terminal of earphones, and a second audio signal corresponding to the second application is outputted to a left terminal of the earphones.

US 2018/329672 Al discloses an electronic device which may display a game application having an associated first audio stream on a first display and a music application having an associated second audio stream on a second display.

### [Disclosure of Invention]

### [Technical Problem]

Since an electronic device, when displaying execution screens of applications in respective display areas, outputs a plurality of pieces of audio data, based on the volume configured in the respective applications, the plurality of pieces of audio data is output regardless of the plurality of display areas. For example, a conventional electronic device, when displaying a first execution screen of a first application on a first display area among a plurality of display areas and displaying a second execution screen of a second application on a second display area among a plurality of display areas, outputs audio data for the first application and the second application, respectively, based on the volume configured in the first application and the second application, respectively. In this case, in order to increase (or reduce) the volume of the first execution screen being displayed on the first display area and reduce (or increase) the volume of the second execution screen being displayed on the second display area, the electronic device must control the volume through configuration of each of the first application and the second application. In addition, when switching from a first state of displaying execution screens on a plurality of display areas obtained by dividing the display area of the display to a second state of displaying an execution screen on the entire display area of the display, the electronic device must change the volume setting again in each application, causing inconvenience.

Various embodiments disclosed in this document are intended to provide a volume control method for outputting audio data of an application, based on the volume configured in each of a plurality of display areas, when displaying an execution screen of an application in each of the plurality of display areas, and an electronic device supporting the same.

### [Solution to Problem]

The invention is set out in the appended set of claims, wherein the figures and respective description relate to advantageous embodiments thereof.

### [Advantageous Effects of Invention]

According to various embodiments disclosed in this document, a volume control method and an electronic device supporting the same may output audio data of an application, based on the volume configured in each of a plurality of display areas, thereby outputting audio data of an application according to the user's intention of individually utilizing each display area.

In addition, according to various embodiments disclosed in this document, a volume control method and an electronic device supporting the same may output audio data of an application, based on the volume configured in each of a plurality of display areas, thereby maintaining configuration of volume for each application even when switching from a first state of displaying execution screens on a plurality of display areas obtained by dividing the display area of the display to a second state of displaying an execution screen on the entire display area of the display.

In addition, various effects identified directly or indirectly through this document may be provided.

### [Brief Description of Drawings]

FIG. 1A is a diagram illustrating a front surface of an electronic device in a first state (e.g., a reduced state) according to an embodiment.
FIG. 1B is a diagram illustrating a front surface of an electronic device in a second state (e.g., an extended state) according to an embodiment.
FIG. 2 is a block diagram of an electronic device according to an embodiment.
FIG. 3 is a diagram illustrating a screen for controlling volume for each display area of an electronic device according to an embodiment.
FIG. 4 is a diagram illustrating a screen for controlling volume for each display area depending on switching of an execution screen of an electronic device according to an embodiment.
FIG. 5 is a diagram illustrating a screen for controlling volume for each display area depending on an aspect ratio of an electronic device according to an embodiment.
FIG. 6 is a diagram illustrating a screen for controlling volume for each display area of an electronic device through an object according to an embodiment.
FIG. 7 is a diagram illustrating a screen for controlling volume for each display area according to extension of a display of an electronic device according to an embodiment.
FIG. 8 is a flowchart illustrating a method for controlling volume for each display area of an electronic device according to an embodiment.
FIG. 9 is a diagram illustrating an electronic device in a network environment according to an embodiment.

In connection with the description of the drawings, the same reference numerals may be assigned to the same or corresponding elements.

### [Mode for Carrying out the Invention]

Hereinafter, various embodiments of the disclosure will be described with reference to the accompanying drawings.

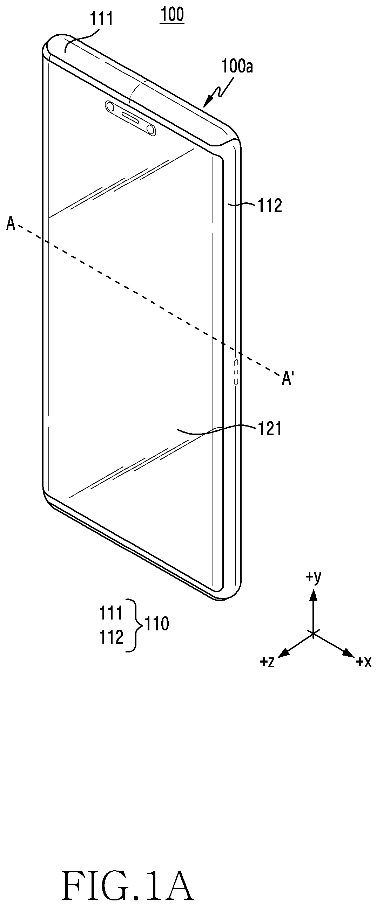

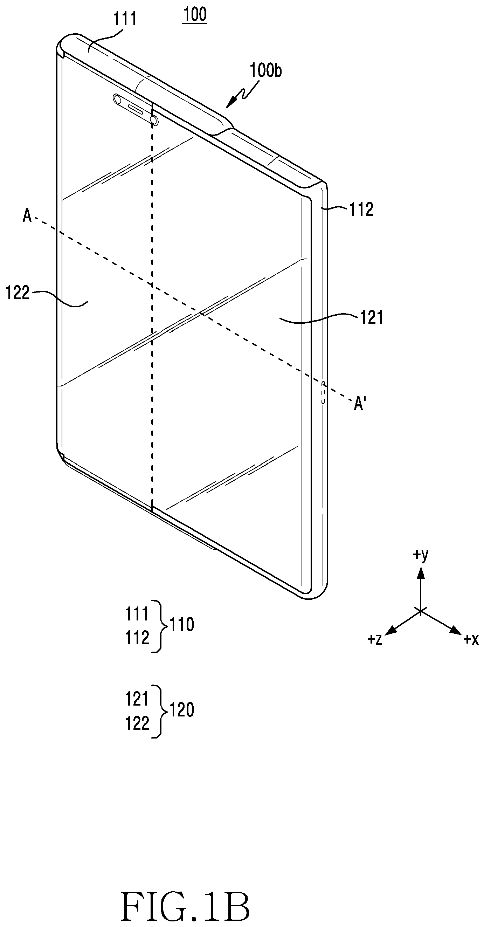

FIG. 1A is a diagram illustrating a front surface of an electronic device in a first state (e.g., a reduced state) according to an embodiment. FIG. 1B is a diagram illustrating a front surface of an electronic device in a second state (e.g., an extended state) according to an embodiment.

According to various embodiments disclosed in this document, a surface facing in substantially the same direction as a direction in which at least a portion (e.g., a first portion 121) of a flexible display 120 of an electronic device 100 faces may be defined as s front surface of the electronic device 100, and a surface opposite the front surface may be defined as a rear surface of the electronic device 100. A surface surrounding a space between the front surface and the rear surface may be defined as a side surface of the electronic device 100.

A flexible display 120 may be disposed in at least a part of the electronic device 100 according to an embodiment. According to an embodiment, the flexible display 120 may be disposed to include at least partial flat surface and at least partial curved surface. According to an embodiment, a flexible display 120 and a slidable housing 110 surrounding at least a part of an edge of the flexible display 120 may be disposed on the front surface of the electronic device 100.

According to an embodiment, the housing 110 may form a partial area of the front surface (e.g., the surface of the electronic device 100 facing in the +z direction in FIGS. 1A and 1B) of the electronic device 100, the rear surface (e.g., the surface of the electronic device 100 facing in the -z direction in FIGS. 1A and 1B), and the side surface (e.g., the surface connecting the front surface and the rear surface of the electronic device 100). According to another embodiment, the housing 110 may form a partial area of the side surface and the rear surface of the electronic device 100.

According to an embodiment, the housing 110 may include a first housing 111 and a second housing 112 coupled to the first housing 111 so as to move relative thereto within a predetermined range.

According to an embodiment, the flexible display 120 may include a first part 121 that may be coupled to the second housing 112 and a second part 122 that extends from the first part 121 and may be inserted into the electronic device 100.

According to an embodiment, the electronic device 100 may include a first state 100a and a second state 100b. For example, the first state 100a and the second state 100b of the electronic device 100 may be determined according to the position of the second housing 112 relative to the first housing 111, and the electronic device 100 may be configured to switch between the first state 100a and the second state 100b by a user's manipulation or mechanical operation.

According to an embodiment, the first state 100a of the electronic device 100 may indicate a state before the housing 110 is expanded. The second state 100b of the electronic device 100 may indicate a state in which the housing 110 is at least partially expanded.

According to an embodiment, when the electronic device 100 switches from the first state 100a to the second state 100b according to movement of the second housing 112, the second part 122 of the flexible display 120 may be drawn out (or exposed) from the inside of the electronic device 100 to the outside. According to an embodiment, the state in which the flexible display 120 is drawn out (or exposed) may indicate that the flexible display 120 is viewable from the outside of the electronic device 100. In another embodiment, when the electronic device 100 switches from the second state 100b to the first state 100a according to the movement of the second housing 112, the second part 122 of the flexible display 120 may be inserted into the electronic device 100. According to an embodiment, the state in which the flexible display 120 is inserted may indicate that the flexible display 120 is not viewable from the outside of the electronic device 100.

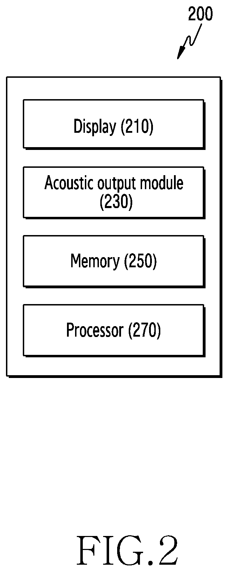

FIG. 2 is a block diagram of an electronic device according to an embodiment.

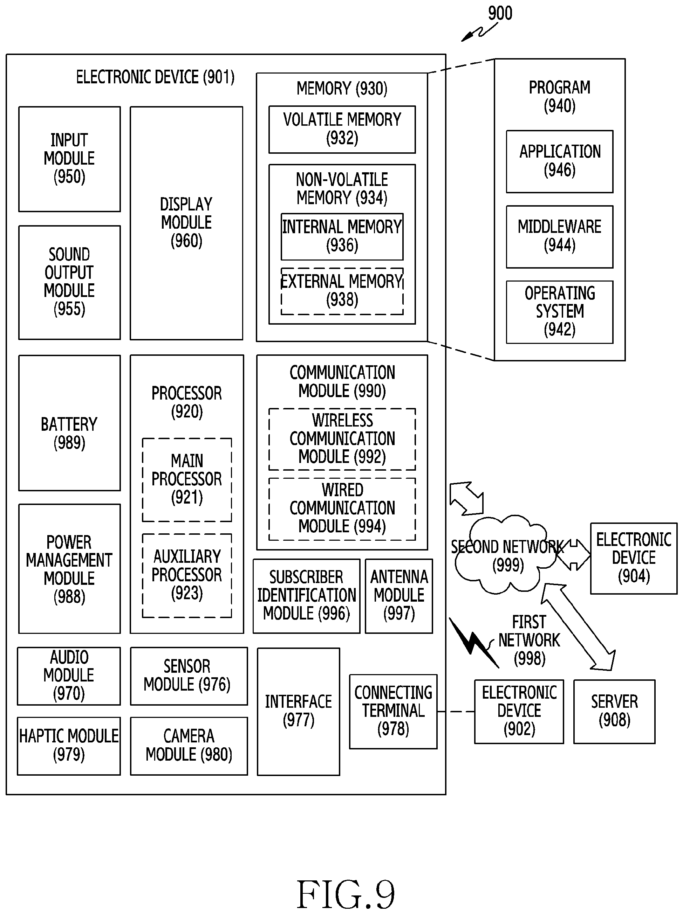

Referring to FIG. 2, an electronic device 200 (e.g., the electronic device 901 in FIG. 9), when displaying an execution screen according to execution of an application on a display area of a display 210, may output audio data included in the application, based on volume related to the display area. For example, when dividing the display area of the display 210 into a plurality of display areas and displaying execution screens of applications on the plurality of divided display areas (e.g., a first display area, a second display area,..., and an n^{th} display area), respectively, the electronic device 200 may output audio data included in the applications respectively corresponding to the execution screens, based on the volume (e.g., a first volume, a second volume,..., and an n^{th} volume) configured in the respective display areas.

Referring to FIG. 2, the electronic device 200 for providing the above functions may include a display 210, an acoustic output module 230, a memory 250, and a processor 270. However, elements of the electronic device 200 are not limited thereto. In various embodiments, the electronic device 200 may exclude one of the above-described elements or further include at least one other element. For example, the electronic device 200 may further include a communication module (e.g., the communication module 990 in FIG. 9).

According to an embodiment, the display 210 may include at least one display area to display an execution screen of an application. For example, when the display 210 is to display a plurality of execution screens according to execution of a plurality of applications, the display 210 may switch from a first state of displaying one of the plurality of execution screens on the entire display area of the display 210 to a second state in which the entire display area is divided into a plurality of display areas. In an embodiment, the volume related to each display area may be configured in the plurality of display areas. For example, a first volume may be configured in a first display area among the plurality of display areas, and a second volume may be configured in a second display area among the plurality of display areas.

According to an embodiment, the display 210 may display execution screens of applications on a plurality of display areas and/or a display area extending from the plurality of display areas, based on a third state (e.g., the first state 100a in FIG. 1A) or a fourth state (e.g., the second state 100b in FIG. 1B). In an embodiment, the display 210 may respectively display a plurality of execution screens on the plurality of display areas, based on a third state corresponding to the reduced state. The reduced state may be, for example, a state in which an area of the display 210 exposed to be viewable from the outside (e.g., the direction in which the user views) corresponds to a first area. In an embodiment, the display 210 may respectively display a plurality of execution screens on the plurality of display areas and a display area extended from the plurality of display areas, based on a fourth state corresponding to the extended state. The extended state may be, for example, a state in which an area of the display 210 exposed to be viewable from the outside corresponds to a second area (e.g., an area greater than the first area).

According to various embodiments, the shape of the display 210 may be changed. For example, in the case where the display 210 is a foldable display, it may switch from a state (e.g., a third state) in which one surface (e.g., a rear surface) of a plurality of display areas and one surface (e.g., a rear surface) of a display area extended from the plurality of display areas face each other at a first angle to a state (e.g., a fourth state) in which one surface of the plurality of display areas and one surface of the display area extended from the plurality of display areas are unfolded at a second angle (e.g., an angle greater than the first angle). As another example, in the case where the display 210 is a slidable display, it may switch from a state (e.g., a third state state) in which a display area extended from a plurality of display areas is rolled up around one surface (e.g., a rear surface) of a plurality of display areas to a state (e.g., a fourth state) in which one surface of the plurality of display areas and one surface of the display area extended from the plurality of display areas are unfolded at a second angle. In various embodiments, the display 210 may form a curved surface (e.g., a folded state or a rolled state) or a flat surface (e.g., an unfolded state), based on a folding area (or sliding area), in association with one of a third state (e.g., a folded state or a rolled state) and a fourth state (e.g., an unfolded state).

According to an embodiment, the acoustic output module 230 (e.g., the acoustic output module 955 in FIG. 9) transmits audio data included in the application, based on at least one of the volume configured in the application or the volume related to the display area of the display 210. In an embodiment, the acoustic output module 230 may output audio data included in the application, based on the volume configured in the application, to correspond to the first state (e.g., the state of displaying one execution screen on the entire display area) of the display 210. In an embodiment, the acoustic output module 230 may output audio data included in each of a plurality of applications, based on the volume configured in each of a plurality of display areas, to correspond to the second state (e.g., the state in which the entire display area is divided into a plurality of display areas) of the display 210. In various embodiments, at least a part of the acoustic output module 230 may be exposed to the outside of the electronic device 200 for efficient output of audio data.

According to an embodiment, a plurality of applications may be stored in the memory 250 (e.g., the memory 930 in FIG. 9). In an embodiment, the memory 250 may provide a plurality of applications (or data related to execution of applications) to the processor 270 according to a request from the processor 270.

According to an embodiment, the processor 270 (e.g., the processor 920 in FIG. 9), based on the state (e.g., the first state to the fourth state) of the display 210, may configure volume for outputting audio data included in the application through the acoustic output module 230 or an external electronic device (e.g., a speaker).

In an embodiment, when the processor 270 configures (or switches) the display 210 to the first state (e.g., the state of displaying one execution screen on the entire display area), the processor 270 may display an execution screen of an application on the entire display area of the display 210 and output audio data included in the application, based on the volume configured in the application, through the acoustic output module 230 or an external electronic device. For example, if the volume configured in the application is 70% of the maximum value, the processor 270 may output audio data of the application, based on the volume of 70%, through the acoustic output module 230 or an external electronic device.

In an embodiment, when the processor 270 configures (or switches) the display 210 to the second state (e.g., the state in which the entire display area is divided into a plurality of display areas), the processor 270 may display respective execution screens of a plurality of applications on a plurality of display areas of the display 210 and output audio data included in the respective applications, based on the volume configured in the respective display areas, through the acoustic output module 230 or an external electronic device. For example, the processor 270 may output first audio data of a first application among the plurality of applications, based on a first volume configured in a first display area among the respective display areas, through the acoustic output module 230 or an external electronic device and output second audio data of a second application among the plurality of applications, based on a second volume (e.g., a volume including a value different from that of the first volume) configured in a second display area among the respective display areas, through the acoustic output module 230 or an external electronic device.

In an embodiment, when the processor 270 switches the display 210 from the third state (e.g., a reduced state of the display area) to the fourth state (e.g., an extended state of the display area), the processor 270 may respective execution screens of a plurality of applications on a plurality of display areas of the display 210 and display an execution screen of an application on a display area extended from the plurality of display areas. In an embodiment, the processor 270 may output audio data of an application related to an execution screen being displayed on the extended display area, based on the volume configured in the extended display area, through the acoustic output module 230 or an external electronic device. **In an** embodiment, the processor 270 may configure a volume related to the extended display area, based on a user input. For example, when the processor 270 detects the user input from the first display area to the extended display area among the plurality of display areas (e.g., drag & drop), the processor 270 may configure the volume configured in the first display area as the volume of the extended display area.

According to an embodiment, the processor 270 may output audio data of an application, based on the volume configured in the application and the volume configured in the display area of the display 210, through the acoustic output module 230 or an external electronic device. For example, in the case where the processor 270 configures the volume of an application as 50%, the processor 270 may apply a weight of 1/2 to a volume of 100% related to the display area and output audio data at a volume of 50%. As another example, in the case where the processor 270 configures the volume of an application as 100%, the processor 270 may apply a weight of 100% to a volume of 0% related to the display area and may not output audio data at a volume of 0%.

According to an embodiment, the processor 270 may configure respective volumes of the plurality of display areas, based on a ratio of each of the plurality of display areas among the entire display area of the display 210. For example, in the case where the processor 270 configures a first display area at a rate of 50% and a second display area at a rate of 50%, among a plurality of display areas, with respect to the entire display area of the display 210, the processor 270 may configure the volume related to each of the first display area and the second display area as 50%. As another example, in the case where the processor 270 configures a first display area at a rate of 30% and a second display area at a rate of 70%, among a plurality of display areas, with respect to the entire display area, the processor 270 may configure the volume related to the first display area as 30% and configure the volume related to the second display area as 70%.

According to an embodiment, when the processor 270 switches execution screens of a plurality of applications being displayed on a plurality of display areas of the display 210, the processor 270 may output audio data of an application corresponding to the switched execution screen, based on the volume related to the switched display area, through the acoustic output module 230 or an external electronic device. For example, when a first execution screen displayed on a first display area among a plurality of display areas is moved onto a second display area, the processor 270 may output first audio data of a first application corresponding to the first execution screen, based on a second volume related to the second display area. **In** addition, when a second execution screen onto the second display area moves according to the movement of the first execution screen, the processor 270 may output second audio data of a second application corresponding to the second execution screen, based on a first volume related to the first display area.

According to an embodiment, the processor 270 may display objects for controlling volumes related to respective display areas on a plurality of display areas of the display 210. For example, if a user input (e.g., a touch) is detected on a first display area among a plurality of display areas, the processor 270 may display an object for controlling the volume related to the first display area on an area corresponding to a position where the user input is detected. In various embodiments, the processor 270 may deactivate the display of the object when a specified period of time has elapsed.

According to an embodiment, the processor 270 may move the position of the object for controlling the volume related to each display area on a plurality of display areas, based on a user input. For example, if the processor 270 detects, while an object for controlling the volume related to the display area is being displayed on the first display area among the plurality of display areas, a user input (e.g., drag & drop) for moving the object, the processor 270 may move the object to the second display area among the plurality of display areas, based on the detected user input, so that the volume related to the second display area may be controlled through the moved object.

In various embodiments, the electronic device 200 may further include a detection circuit (not shown) to detect a reduced state and an extended state according to the above-mentioned physical change of the display 210. In various embodiments, the detection circuit may detect a folding operation according to a change in an angle between a first housing (not shown) enclosing a part of the display 210 and a second housing (not shown) enclosing the remaining part of the display 210. For example, when the first housing and the second housing switch from an unfolded state (or a folded state) to a folded state (or an unfolded state), the detection circuit may detect that a folding operation has performed, thereby generating a folding detection signal. In various embodiments, the detection circuit may include a detection sensor (e.g., an acceleration sensor, an angular velocity sensor, a geomagnetic sensor, the Hall sensor, a rotation angle sensor, and an optical sensor) disposed in at least one of the first housing and the second housing.

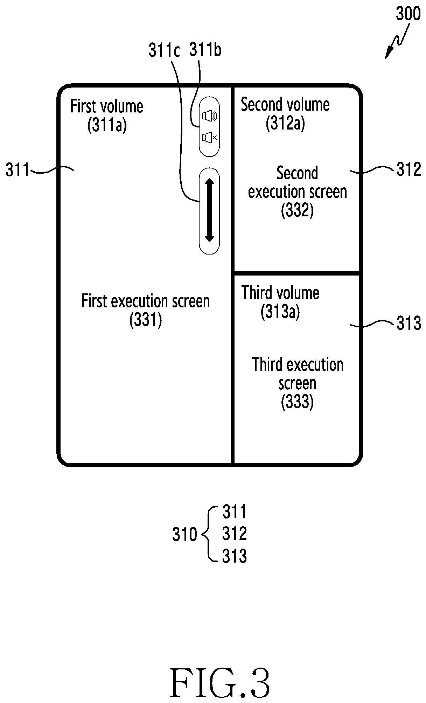

FIG. 3 is a diagram illustrating a screen for controlling volume for each display area of an electronic device according to an embodiment.

Referring to FIG. 3, in the case where an electronic device 300 (e.g., the electronic device 200 in FIG. 2) displays respective execution screens 331, 332, and 333 of a plurality of applications on a plurality of display areas 311, 312, and 313 of a display 310 (e.g., the display 210 in FIG. 2), the electronic device 300 may output audio data included in the respective applications, based on volumes 311a, 312a, and 313a related to the plurality of display areas 311, 312, and 313, respectively.

According to an embodiment, the electronic device 300 may output a first audio data included in a first application corresponding to a first execution screen 331, based on a first volume 311a related to a first display area 311 of the display 310. For example, in the case where the first volume 311a related to the first display area 311 is configured as 60%, the electronic device 300 may output the first audio data at a volume of 60%. In various embodiments, the electronic device 300 may display an object 311b or 311c for controlling the first volume 311a related to the first display area 311 on the first display area 311. In various embodiments, the electronic device 300 may display the object 311b or 311c on the first display area 311, based on a user input (e.g., an input through a physical button). The object 311b may be formed in the form of an on/off button for activating or deactivating mute. The object 311c may be formed in the form of a bar for adjusting the volume within a specified range.

According to an embodiment, the electronic device 300 may output second audio data included in a second application corresponding to a second execution screen 332, based on a second volume 312a related to a second display area 312 of the display 310. For example, in the case where the second volume 312a related to the second display area 312 is configured as 20%, the electronic device 300 may output the second audio data at a volume of 20%. In various embodiments, if the object 311b or 311c for controlling the first volume 311a related to the first display area 311 is moved from the first display area 311 to the second display area 312, the electronic device 300 may control a second volume 312a related to the second display area 312 through the moved object 311b or 311c.

According to an embodiment, the electronic device 300 may output third audio data included in a third application corresponding to a third execution screen 333, based on a third volume 313a related to the third display area 313 of the display 310. For example, in the case where the third volume 313a related to the third display area 313 is configured as 20%, the electronic device 300 may output the third audio data at a volume of 20%. In various embodiments, if the object 311b or 311c, which was moved to control the second volume 312a related to the second display area 312, is moved again onto the third display area 313, the electronic device 300 may control a third volume 313a related to the third display area 313 through the moved object 311b or 311c.

According to various embodiments, when the display 310 switches from a second state (e.g., the state in which the entire display area is divided into a plurality of display areas) to a first state (e.g., a first state of displaying one of the plurality of execution screens on the entire display area), the electronic device 300 may output each piece of audio data, based on the volume configured in each of the plurality of applications.

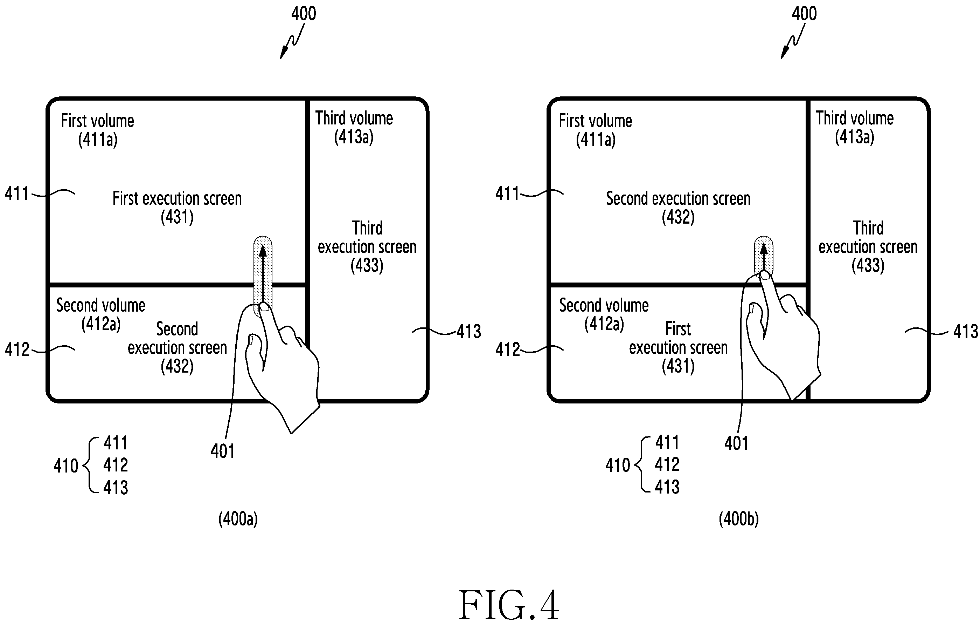

FIG. 4 is a diagram illustrating a screen for controlling volume for each display area according to switching of an execution screen of an electronic device according to an embodiment.

Referring to FIG. 4, when execution screens 431, 432, and 433 being displayed on a plurality of display areas 411, 412, and 413 of a display 410 switch to each other, an electronic device 400 (e.g., the electronic device 200 in FIG. 2) may output audio data of applications corresponding to the switched execution screens 431, 432, and 433, based on the volume related to volume 411a, 412a, or 413a related to the switched display area 411, 412, or 413.

Referring to a first state 400a, in the case of displaying execution screens 431, 432, and 433 of a plurality of applications on a plurality of display areas 411, 412, and 413 of the display 410, respectively, the electronic device 400 may output audio data included in each application, based on the volumes 411a, 412a, and 413a related to the plurality of display areas 411, 412, and 413, respectively. The electronic device 400 may detect a user input 401 (e.g., drag & drop) for switching between a first execution screen 431 and a second execution screen 432 in the first state 400a.

Referring to a second state 400b, the electronic device 400 may display the first execution screen 431, which was displayed on a first display area 411, on a second display area 412, based on the user input 401 detected in the first state 400a, and display the second execution screen 432, which was displayed on the second display area 412, on the first display area 411. In the second state 400b, the electronic device 400 may output second audio data of a second application corresponding to the second execution screen 432 moved onto the first display area 411, based on a first volume 411a related to the first display area 411. In the second state 400b, the electronic device 400 may output second audio data of a second application corresponding to the first execution screen 431 moved onto the second display area 412, based on a second volume 412a related to the second display area 412. In an embodiment, the electronic device 400 may continue to output third audio data of a third application corresponding to a third execution screen 433, which is being displayed on a third display area 413 without movement of its position, based on a third volume 413a.

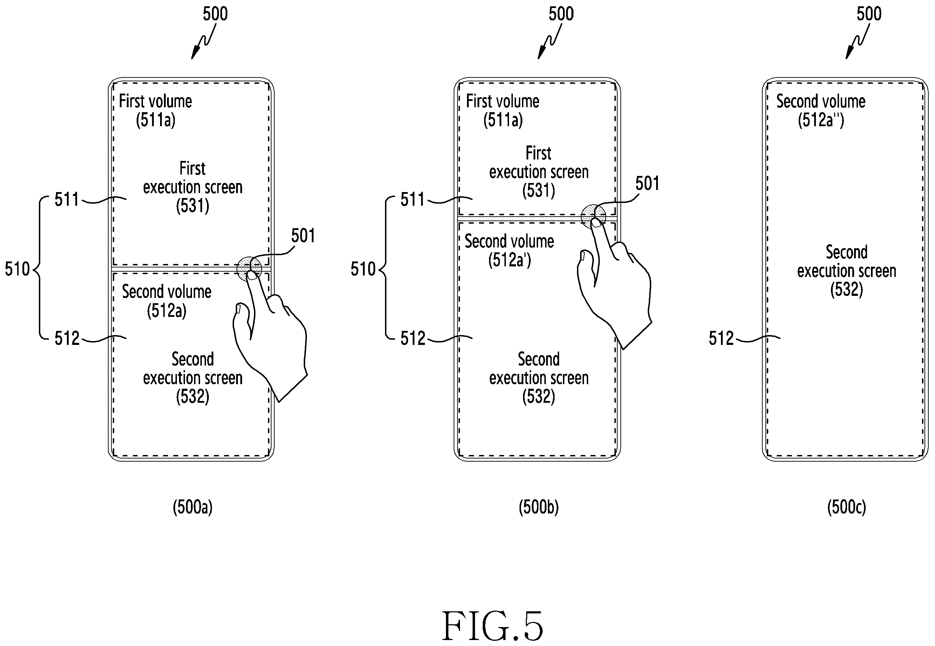

FIG. 5 is a diagram illustrating a screen for controlling volume for each display area depending on an aspect ratio of an electronic device according to an embodiment.

Referring to FIG. 5, an electronic device 500 (e.g., the electronic device 200 in FIG. 2) may configure volume related to each of the display areas 511 and 512, based on a size (or area) ratio of each of the display areas 511 and 512 to the entire display area (e.g., the area including a first display area 511 and a second display area 512) of a display 510.

Referring to a first state 500a, in the case where the ratio of the first display area 511 to the entire display area of a display 510 is configured as 50% and where the ratio of the second display area 512 thereto is configured as 50%, the electric device 500 may configure a first volume 511a related to the first display area 511 as 50% and configure a second volume 512a related to the second display area 512 as 50%. In an embodiment, the electronic device 500 may output first audio data of a first application corresponding to a first execution screen 531 being displayed on the first display area 511, based on the first volume 511a configured as 50%. In an embodiment, the electronic device 500 may output second audio data of a second application corresponding to a second execution screen 532 being displayed on the second display area 512, based on the second volume 512a configured as 50%. In an embodiment, the electronic device 500 may detect a user input 501 for adjusting the sizes of the display areas 511 and 512. For example, the electronic device 500 may adjust the ratios of the first display area 511 and the second display area 512 to the entire display area so as to correspond to the user input 501 for moving the boundary between the first display area 511 and the second display area 512.

Referring to a second state 500b, the electronic device 500 may configure a first volume 511a' related to the first display area 511 and a second volume 512a' related to the second display area 512, based on the changed size ratios of the display areas 511 and 512 by the user input 501 detected in the first state 500a. In an embodiment, in the case where the ratio of the first display area 511 to the entire display area is configured as 30% and where the ratio of the second display area 512 thereto is configured as 70% by the user input 501 detected in the first state 500a, the electric device 500 may configure a first volume 511a' related to the first display area 511 as 30% and configure a second volume 512a' related to the second display area 512 as 70%. For example, based on the user input 501 detected in the first state 500a, the first volume 511a' related to the first display area 511 may be reduced from 50% to 30%, and the second volume 512a' related to the second display area 512 may be increased from 50% to 70%. In an embodiment, the electronic device 500 may output the first audio data of the first application corresponding to the first execution screen 531 being displayed on the first display area 511, based on the first volume 511a' configured as 30%. In an embodiment, the electronic device 500 may output the second audio data of the second application corresponding to the second execution screen 532 being displayed on the second display area 512, based on the second volume 512a' configured as 70%. In an embodiment, the electronic device 500 may detect a user input 501 for adjusting the ratios of the display areas 511 and 512. For example, the electronic device 500 may adjust the ratios of the first display area 511 and the second display area 512 so as to correspond to the user input 501 for moving the boundary between the first display area 511 and the second display area 512.

Referring to a third state 500c, the electronic device 500 may configure the second volume 512a related to the second display area 512, based on the ratios of the display areas 511 and 512 changed by the user input 501 detected in the second state 500b. In an embodiment, in the case where the ratio of the second display area 512 is configured as 100% by the user input 501 detected in the second state 500b, the electronic device 500 may configure the first volume 511a' related to the first display area 511 in the second state 500b as 0% and configure the second volume 512a' related to the second display area 512 therein as 100%. In an embodiment, the electronic device 500 may output the second audio data of the second application corresponding to the second execution screen 532 being displayed on the second display area 512, based on the second volume 512a' configured as 100%. In various embodiments, the third state 500c may be a state in which the second execution screen 532 is displayed on the entire display area of the display 510.

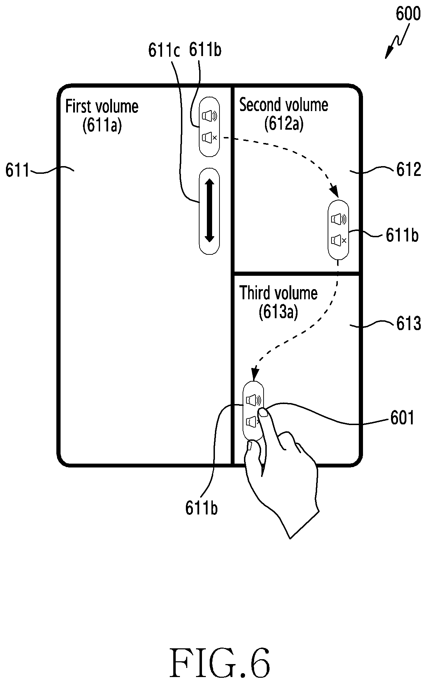

FIG. 6 is a diagram illustrating a screen for controlling volume for each display area of an electronic device through an object according to an embodiment.

According to an embodiment, an electronic device 600 (e.g., the electronic device 200 in FIG. 2) may display an object 611b or 611c for controlling volumes 611a, 612a, and 613a related to respective display areas 611, 612, and 613 on a plurality of display areas 611, 612, and 613 of a display (e.g., the display 210 in FIG. 2). For example, if a user input (e.g., a touch) is detected on a first display area 611 among a plurality of display areas 611, 612, and 613, the electronic device 600 may display an object 611b or 611c for controlling a first volume 611a related to the first display area 611 on an area corresponding to the position where the user input is detected. The object 611b or 611c may be displayed on the display area 611, 612, or 613 for a minimum amount of time in order to minimize interference with an execution screen being displayed on the display area 611, 612, or 613. For example, the object 611b or 611c may be displayed on the first display area 611 for a specified time (e.g., 3 seconds) after a user input is detected through a physical button or may be displayed on the first display area 611 until the first volume 611a related to the first display area 611 is changed through the object 611b or 611c. In various embodiments, the object 611b or 611c may be displayed to be translucent on the display area 611, 612, or 613.

According to an embodiment, the electronic device 600, based on a user input 601, may move the position of the object 611b or 611c for controlling the volumes 611a, 612a, and 613a related to the respective display areas 611, 612, and 613 on the plurality of display areas 611, 612, and 613. For example, if a user input 601 (e.g., drag & drop) for moving the object 611b or 611c is detected while displaying the object 611b or 611c for controlling the first volume 611a related to the first display area 611 on the first display area 611, the electronic device 600, based on the detected user input 601, may move the object 611b or 611c onto a third display area 613 (or second display area 612), enabling the user to control a third volume 613a (or second volume 612a) related to the third display area 613 (or second display area 612) through the moved object 611b or 611c.

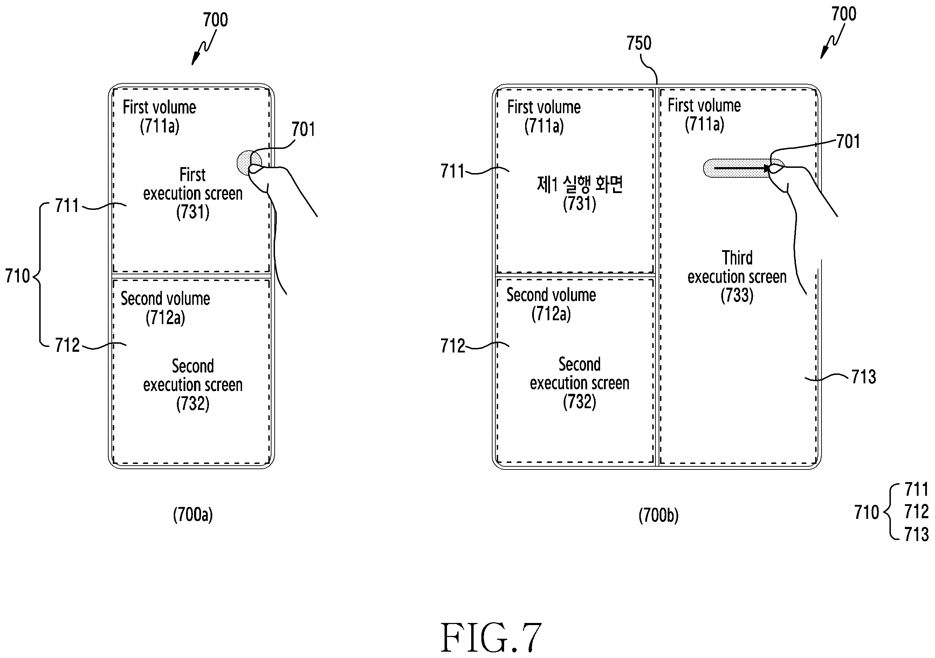

FIG. 7 is a diagram illustrating a screen for controlling volume for each display area according to extension of a display of an electronic device according to an embodiment.

According to an embodiment, when an electronic device 700 (e.g., the electronic device 200 in FIG. 2) switches a display 710 from the reduced state to the expansion state described above in FIG. 2, the electronic device 700 may configure a volume related to an extended display area 713, based on a volume 711a or 712a related to one display area 711 or 712 among a plurality of display areas 711 and 712 of the display 710.

Referring to a first state 700a, the electronic device 700, based on the reduced state of the display 710, may display a first execution screen 731 on a first display area 711 and display a second display area 712 on a second execution screen 732. In an embodiment, the electronic device 700 may output first audio data of a first application corresponding to the first execution screen 731 being displayed on the first display area 711, based on a first volume 711a. In an embodiment, the electronic device 700 may output second audio data of a second application corresponding to the second execution screen 732 being displayed on the second display area 712, based on a second volume 712a. In an embodiment, the electronic device 700 may detect a user input 701 for extending the display area from the plurality of display areas 711 and 712.

Referring to a second state 700b, the electronic device 700, based on the user input 701 detected in the first state 700a, may extend a display area from the plurality of display areas 711 and 712 such that a third display area 713 is exposed to the outside of the electronic device 700. In an embodiment, the electronic device 700 may configure a volume related to the third display area 713, based on the volume 711a or 712a related to the display area 711 or 712 corresponding to the position of the user input 701 detected in the first state 700a. For example, when the electronic device 700 determines the location of the user input 701 detected in the first state 700a to be the first display area 711, the electronic device 700 may configure a third volume related to the third display area 713 to be the first volume 711a, based on the first volume 711a related to the first display area 711. In an embodiment, the electronic device 700 may output third audio data of a third application corresponding to a third execution screen 733 being displayed on the third display area 713, based on the first volume 711a related to the third display area 713.

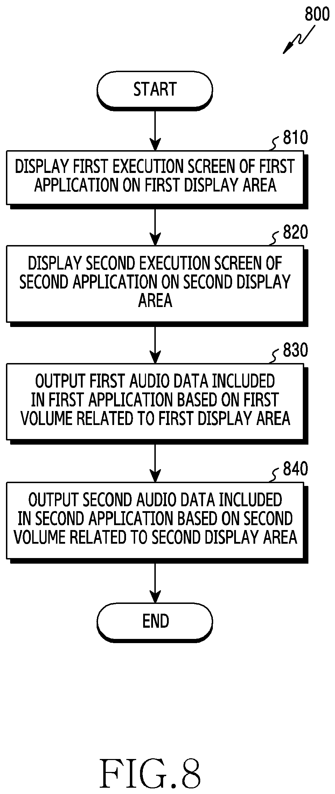

FIG. 8 is a flowchart 800 illustrating a method for controlling volume for each display area of an electronic device according to an embodiment.

Referring to FIG. 8, when displaying respective execution screens for a plurality of applications on a plurality of display areas of a display (e.g., the display 210 in FIG. 2), an electronic device (e.g., the electronic device 200 in FIG. 2) may perform operations 810, 820, 830, and 840 to output audio data included in each of the plurality of applications, based on volumes related to respective display areas.

Referring to operation 810, the electronic device 200 may display a first execution screen (e.g., the first execution screen 331 in FIG. 3) according to execution of a first application on a first display area (e.g., the first display area 311 in FIG. 3) among a plurality of display areas of the display 210.

Referring to operation 820, the electronic device 200 may display a second execution screen (e.g., the second execution screen 332 in FIG. 3) according to execution of a second application, which is different from the first application, on a second display area (e.g., the second display area 312 in FIG. 3) different from the first display area 311, among the plurality of display areas of the display 210.

Referring to operation 830, the electronic device 200 may output first audio data included in the first application, based on a first volume (e.g., the first volume 311a in FIG. 3) related to the first display area 311, through an acoustic output module (e.g., the acoustic output module 230 in FIG. 2) or an external electronic device. For example, in the case of displaying the first execution screen 331 on the first display area 311, even if the volume is configured as 70% in the first application, the electronic device 200 may ignore the volume of 70% configured in the first application and may output first audio data, based on a first volume 311a related to the first display area 311.

Referring to operation 840, the electronic device 200 may output second audio data included in a second application, based on a second volume (e.g., the second volume 312a in FIG. 3) related to the second display area 312. For example, in the case of displaying the second execution screen 332 on the second display area 312, even if the volume is configured as 30% in the second application, the electronic device may ignore the volume of 30% configured in the second application and may output second audio data, based on the second volume 312a related to the second display area 312.

According to various embodiments, in operation 820, the electronic device 200 may output first audio data of a first application, based on the volume configured in the first application and the volume configured in the first display area 311, through the acoustic output module 230 or an external electronic device. For example, in the case where the volume is configured as 50% in the first application, the electronic device 200 may apply a weight of 1/2 to the volume of 100% related to the first display area 311, thereby outputting the first audio data at a volume of 50%.

According to various embodiments, if the electronic device 200 switches from a state in which the entire display area of the display 210 is divided into a plurality of display areas (e.g., the first state 500a or the second state 500b in FIG. 5) to a state in which one execution screen is displayed on the entire display area (e.g., the third state 500c in FIG. 5) after operation 820, the electronic device 200 may display a first execution screen of a first application on the entire display area of the display 210 and may output first audio data included in the first application, based on the volume configure in the first application, through the acoustic output module 230 or an external electronic device.

According to various embodiments, if the electronic device 200 switches the display 210 from a reduced state of displaying an execution screen on a plurality of display areas to an extended state of displaying an execution screen on a plurality of display areas and an extended display area after operation 820, the electronic device 200 may configure a volume related to the expanded display area, based on user input. For example, if the electronic device 200 detects the user input from a first display area (e.g., the first display area 711 in FIG. 7) to the extended display area (e.g., the third display area 713 in FIG. 7) (e.g. drag & drop) among the plurality of display areas, the electronic device 200 may configure the volume configured in the first display area 711 as the volume of the extended display area 713.

According to various embodiments, in operation 820, the electronic device 200 may configure volumes of the respective display areas, based on ratios of the respective display areas to the entire display area of the display 210. For example, in the case where the electronic device 200 configures a first display area at a rate of 50% and a second display area at a rate of 50%, among a plurality of display areas, with respect to the entire display area of the display 210, the electronic device 200 may configure the volume related to each of the first display area and the second display area as 50%.

According to various embodiments, if the electronic device 200 switches execution screens of a plurality of applications being displayed on a plurality of display areas of the display 210 to each other after operation 820, the electronic device 200 may output audio data of an application corresponding to the switched execution screen, based on the volume related to the switched display area, through the acoustic output module 230 or an external electronic device. For example, if a first execution screen (e.g., the first execution screen 431 in FIG. 4) displayed on a first display area (e.g., the first display area 411 in FIG. 4) among a plurality of display areas is moved onto a second display area (e.g., the second display area 412 in FIG. 4), the electronic device 200 may output first audio data of a first application corresponding to the first execution screen 431, based on a second volume 412a related to the second display area 412.

According to various embodiments, the electronic device 200 may display an object (e.g., the object 311b or 311c in FIG. 3) for controlling the volume related to each display area on the plurality of display areas of the display 210 in operation 820 or after operation 820. For example, the electronic device 200, based on a user input (e.g., an input through a physical button), may display an object 311b or 311c for controlling the first volume 311a related to the first display area 311 on the first display area 311. If the electronic device 200 receives an input related to a change in the first volume 311a through the object 311b or 311c, the electronic device 200 may adjust the volume of audio data related to the execution screen being displayed on the first display area 311, based on the received input.

According to various embodiments, after operation 820 or operation 820, the electronic device 200 may move the position of the object (e.g., the object 611b or 611c in FIG. 6) for controlling the volume related to each display area on the plurality of display areas, based on a user input. For example, the electronic device 200 may detect, while the object 611b or 611c for controlling a first volume (e.g., the first volume 611a in FIG. 6) related to a first display area 611 is being displayed on the first display area (e.g., the first display area 611 in FIG. 6), a user input (e.g., the user input 601 in FIG. 6) for moving the object 611b or 611c. The electronic device 200 may move the object 611b or 611c onto the second display area (e.g., the second display area 612 in FIG. 6), based on the detected user input 601, so that a second volume (e.g., the second volume 612a in FIG. 6) related to the second display area 612 may be controlled through the moved object 611b or 611.

According to various embodiments, an electronic device (e.g., the electronic device 200) may include a display (e.g., the display 210), an acoustic output module (e.g., the an acoustic output module 230), a memory (e.g., the memory 250) configured to store a plurality of applications, and a processor (e.g., the processor 270) electrically connected to the display, the acoustic output module, and the memory, wherein the processor may be configured to display a first execution screen (e.g., the first execution screen 731) according to execution of a first application on a first display area (e.g., the first display area 711) among a plurality of display areas (e.g., the plurality of display areas 711 and 712) of the display, display a second execution screen (e.g., the second execution screen 732) according to execution of a second application, which is different from the first application, on a second display area (e.g., the second display area 712) different from the first display area among the plurality of display areas, output first audio data included in the first application, based on a first volume (e.g., the first volume 711a) related to the first display area, through the acoustic output module or an external electronic device connected to the electronic device by wired or wireless communication, and output second audio data included in the second application, based on a second volume (e.g., the second volume 712a) related to the second display area, through the acoustic output module or the external electronic device.

According to various embodiments, the processor may detect a first user input for adjusting the volume of each of the plurality of display areas and determine the first volume and the second volume, based on the detected first user input.

According to various embodiments, the processor may detect a second user input (e.g., the user input 501) for adjusting the size of the first display area and adjust a ratio of the first display area to the entire display area of the display, based on the detected second user input.

According to various embodiments, the processor may determine the first volume, based on the ratio of the first display area to the entire display area of the display.

According to various embodiments, the processor may output, if the first execution screen is displayed on the entire display area of the display, the first audio data, based on the volume configured in the first application, through the acoustic output module or the external electronic device.

According to various embodiments, the processor may detect a third user input (e.g., the user input 401) for moving the first execution screen from the first display area to the second display area, display the first execution screen on the second display area, based on the detected third user input, and output the first audio data, based on the second volume, through the acoustic output module or the external electronic device as the first execution screen is displayed on the second display area.

According to various embodiments, the processor may detect a physical change of the display for extending the entire display area of the display, extend the entire display area of the display in response to the detected physical change of the display, and determine the plurality of display areas, based on the extended entire display area.

According to various embodiments, the processor may detect a fourth user input (e.g., user input 701) onto the first display area, detect a physical change of the display, based on the detected fourth user input, configure a third display area (e.g., the third display area 713), which is different from the plurality of display areas, in the extended entire display area, display a third execution screen (e.g., the third execution screen 733) according to execution of a third application, which is different from the first application and the second application, on the third display area, and output third audio data included in the third application, based on the first volume, through the acoustic output module or the external electronic device.

According to various embodiments, the processor may display an object (e.g., the object 311b or 311c) for controlling the first volume on the first display area.

According to various embodiments, the processor may detect a fifth user input (e.g., the user input 601) to the object, move the object from the first display area to the second display area, based on the detected fifth user input, and determine the second volume through the moved object.

According to various embodiments, a volume control method (e.g., the volume control method 800) may include displaying a first execution screen a first application on a first display area among a plurality of display areas of a display (e.g., operation 810), displaying a second execution screen according to execution of a second application, which is different from the first application, on a second display area different from the first display area among the plurality of display areas (e.g., operation 820), outputting first audio data included in the first application, based on a first volume related to the first display area, through an acoustic output module or an external electronic device connected to an electronic device by wired or wireless communication (e.g., operation 830), and outputting second audio data included in the second application, based on a second volume related to the second display area, through the acoustic output module or the external electronic device (e.g., operation 840).

According to various embodiments, the volume control method may further include detecting a first user input for adjusting the volume of each of the plurality of display areas and determining the first volume and the second volume, based on the detected first user input.

According to various embodiments, the volume control method may further include detecting a second user input for adjusting the size of the first display area and adjusting a ratio of the first display area to the entire display area of the display, based on the detected second user input.

According to various embodiments, the volume control method may further include determining the first volume, based on the ratio of the first display area to the entire display area of the display.

According to various embodiments, the volume control method may further include outputting, if the first execution screen is displayed on the entire display area of the display, the first audio data, based on the volume configured in the first application, through the acoustic output module or the external electronic device.

According to various embodiments, the volume control method may further include detecting a third user input for moving the first execution screen from the first display area to the second display area, displaying the first execution screen on the second display area, based on the detected third user input, and outputting the first audio data, based on the second volume, through the acoustic output module or the external electronic device as the first execution screen is displayed on the second display area.

According to various embodiments, the volume control method may further include detecting a physical change of the display for extending the entire display area of the display, extending the entire display area of the display in response to the detected physical change of the display, and determining the plurality of display areas, based on the extended entire display area.

According to various embodiments, the volume control method may further include detecting a fourth user input onto the first display area, detecting a physical change of the display, based on the detected fourth user input onto the first display area, configuring a third display area, which is different from the plurality of display areas, in the extended entire display area, displaying a third execution screen according to execution of a third application, which is different from the first application and the second application, on the third display area, and outputting third audio data included in the third application, based on the first volume, through the acoustic output module or the external electronic device.

According to various embodiments, the volume control method may further include displaying an object for controlling the first volume on the first display area.

According to various embodiments, the volume control method may further include detecting a fifth user input to the object, moving the object from the first display area to the second display area, based on the detected fifth user input, and determining the second volume through the moved object.

FIG. 9 is a block diagram illustrating an electronic device 901 in a network environment 900 according to various embodiments.

Referring to FIG. 1, the electronic device 901 in the network environment 900 may communicate with an electronic device 902 via a first network 998 (e.g., a short-range wireless communication network), or at least one of an electronic device 904 or a server 908 via a second network 999 (e.g., a long-range wireless communication network). According to an embodiment, the electronic device 901 may communicate with the electronic device 904 via the server 908. According to an embodiment, the electronic device 901 may include a processor 920, memory 930, an input module 950, a sound output module 955, a display module 960, an audio module 970, a sensor module 976, an interface 977, a connecting terminal 978, a haptic module 979, a camera module 980, a power management module 988, a battery 989, a communication module 990, a subscriber identification module (SIM) 996, or an antenna module 997. In some embodiments, at least one of the components (e.g., the connecting terminal 978) may be omitted from the electronic device 901, or one or more other components may be added in the electronic device 901. In some embodiments, some of the components (e.g., the sensor module 976, the camera module 980, or the antenna module 997) may be integrated into a single component (e.g., the display module 960).

The processor 920 may execute, for example, software (e.g., a program 940) to control at least one other component (e.g., a hardware or software component) of the electronic device 901 coupled with the processor 920, and may perform various data processing or computation. According to one embodiment, as at least part of the data processing or computation, the processor 920 may store a command or data received from another component (e.g., the sensor module 976 or the communication module 990) in volatile memory 932, process the command or the data stored in the volatile memory 932, and store resulting data in non-volatile memory 934. According to an embodiment, the processor 920 may include a main processor 921 (e.g., a central processing unit (CPU) or an application processor (AP)), or an auxiliary processor 923 (e.g., a graphics processing unit (GPU), a neural processing unit (NPU), an image signal processor (ISP), a sensor hub processor, or a communication processor (CP)) that is operable independently from, or in conjunction with, the main processor 921. For example, when the electronic device 901 includes the main processor 921 and the auxiliary processor 923, the auxiliary processor 923 may be adapted to consume less power than the main processor 921, or to be specific to a specified function. The auxiliary processor 923 may be implemented as separate from, or as part of the main processor 921.

The auxiliary processor 923 may control, for example, at least some of functions or states related to at least one component (e.g., the display module 960, the sensor module 976, or the communication module 990) among the components of the electronic device 901, instead of the main processor 921 while the main processor 921 is in an inactive (e.g., sleep) state, or together with the main processor 921 while the main processor 921 is in an active (e.g., executing an application) state. According to an embodiment, the auxiliary processor 923 (e.g., an image signal processor or a communication processor) may be implemented as a part of another component (e.g., the camera module 980 or the communication module 990) functionally related to the auxiliary processor 923. According to an embodiment, the auxiliary processor (e.g., a neural processing unit (NPU)) may include a hardware structure specific to processing of an artificial intelligence model. The artificial model may be generated through machine learning. For example, this learning may be performed by the electronic device 901 itself where artificial intelligence is executed, and may also be performed through a separate server (e.g., the server 908). A learning algorithm may include, for example, supervised learning, unsupervised learning, semi-supervised learning, or reinforcement learning, but is not limited to the above examples. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep brief network (DBN), a bidirectional recurrent deep neural network (BRDNN), a deep Q-network, and a combination of two or more thereof, but is not limited to the above examples. Additionally or alternatively, the artificial intelligence model may include a software structure, in addition to the hardware structure.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934.

The program 940 may be stored in the memory 930 as software, and may include, for example, an operating system (OS) 942, middleware 944, or an application 946.

The input module 950 may receive a command or data to be used by another component (e.g., the processor 920) of the electronic device 901, from the outside (e.g., a user) of the electronic device 901. The input module 950 may include, for example, a microphone, a mouse, a keyboard, a key (e.g., a button), or a digital pen (e.g., a stylus pen).

The sound output module 955 may output sound signals to the outside of the electronic device 901. The sound output module 955 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 960 may visually provide information to the outside (e.g., a user) of the electronic device 901. The display module 960 may include, for example, a display, a hologram device, or a projector and control circuitry to control a corresponding one of the display, hologram device, and projector. According to an embodiment, the display module 960 may include a touch sensor adapted to detect a touch, or a sensor circuit (e.g., a pressure sensor) adapted to measure the intensity of force incurred by the touch.

The audio module 970 may convert a sound into an electrical signal and vice versa. According to an embodiment, the audio module 970 may obtain the sound via the input module 950, or output the sound via the sound output module 955 or an external electronic device (e.g., an electronic device 902 (e.g., a speaker or a headphone)) directly or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. According to an embodiment, the sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device (e.g., the electronic device 902) directly or wirelessly. According to an embodiment, the interface 977 may include, for example, a high-definition multimedia interface (HDMI), a universal serial bus (USB) interface, a secure digital (SD) card interface, or an audio interface.

The connecting terminal 978 may include a connector via which the electronic device 901 may be physically connected with the external electronic device (e.g., the electronic device 902). According to an embodiment, the connecting terminal 978 may include, for example, an HDMI connector, a USB connector, an SD card connector, or an audio connector (e.g., a headphone connector).

The haptic module 979 may convert an electrical signal into a mechanical stimulus (e.g., a vibration or a movement) or electrical stimulus which may be recognized by a user via his tactile sensation or kinesthetic sensation. According to an embodiment, the haptic module 979 may include, for example, a motor, a piezoelectric element, or an electric stimulator.

The camera module 980 may capture a still image or moving images. According to an embodiment, the camera module 980 may include one or more lenses, image sensors, image signal processors, or flashes.

The power management module 988 may manage power supplied to the electronic device 901. According to one embodiment, the power management module 988 may be implemented as at least part of, for example, a power management integrated circuit (PMIC).

The battery 989 may supply power to at least one component of the electronic device 901. According to an embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the application processor (AP)) and supports a direct (e.g., wired) communication or a wireless communication. According to an embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device 904 via the first network 998 (e.g., a short-range communication network, such as BluetoothTM, wireless-fidelity (Wi-Fi) direct, or infrared data association (IrDA)) or the second network 999 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 992 may identify or authenticate the electronic device 901 in a communication network, such as the first network 998 or the second network 999, using subscriber information (e.g., international mobile subscriber identity (IMSI)) stored in the subscriber identification module 996.

The wireless communication module 992 may support 5G networks and next-generation communication technologies beyond 4G networks, for example, a new radio (NR) access technology. The NR access technology may support enhanced mobile broadband (eMBB), massive machine type communications (mMTC), or ultra-reliable and low-latency communications (URLLC). The wireless communication module 992 may support high-frequency bands (e.g., the mmWave band), for example, in order to achieve a high data transfer rate. The wireless communication module 992 may support various technologies for ensuring performance in high-frequency bands, such as beamforming, massive multiple-input and multiple-output (massive MIMO), full dimensional MIMO (FD-MIMO), array antenna, analog beam-forming, or large-scale antenna. The wireless communication module 992 may support various requirements specified in the electronic device 901, an external electronic device (e.g., the electronic device 904), or a network system (e.g., the second network 999). According to an embodiment, the wireless communication module 992 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 997 may transmit or receive a signal or power to or from the outside (e.g., the external electronic device) of the electronic device 901. According to an embodiment, the antenna module 997 may include an antenna including a radiating element composed of a conductive material or a conductive pattern formed in or on a substrate (e.g., a printed circuit board (PCB)). According to an embodiment, the antenna module 997 may include a plurality of antennas (e.g., array antennas). In such a case, at least one antenna appropriate for a communication scheme used in the communication network, such as the first network 998 or the second network 999, may be selected, for example, by the communication module 990 from the plurality of antennas. The signal or the power may then be transmitted or received between the communication module 990 and the external electronic device via the selected at least one antenna. According to an embodiment, another component (e.g., a radio frequency integrated circuit (RFIC)) other than the radiating element may be additionally formed as part of the antenna module 997.

According to various embodiments, the antenna module 997 may form a mmWave antenna module. According to an embodiment, the mmWave antenna module may include a printed circuit board, a RFIC disposed on or adjacent to a first surface (e.g., the bottom surface) of the printed circuit board and capable of supporting a designated high-frequency band (e.g., the mmWave band), and a plurality of antennas (e.g., an array antenna) disposed on or adjacent to second surface (e.g., the top or side surface) of the printed circuit board and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 901 and the external electronic device 904 via the server 908 coupled with the second network 999. Each of the external electronic devices 902 or 904 may be a device of a same type as, or a different type, from the electronic device 901. According to an embodiment, all or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, mobile edge computing (MEC), or client-server computing technology may be used, for example. The electronic device 901 may provide ultralow-latency services using, e.g., distributed computing or mobile edge computing. In another embodiment, the external electronic device 904 may include an internet-of-things (IoT) device. The server 908 may be an intelligent server using machine learning and/or a neural network. According to an embodiment, the external electronic device 904 or the server 908 may be included in the second network 999. The electronic device 901 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C" may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 940 of FIG. 9) including one or more instructions that are stored in a storage medium (e.g., the internal memory 936 or external memory 938 of FIG. 9) that is readable by a machine. For example, a processor (e.g., the processor 920 of FIG. 9) of the machine may invoke at least one of the one or more stored instructions from the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

## Claims

1. An electronic device (100) comprising:
a display (210);
an acoustic output module (230);
a memory (250) configured to store a plurality of applications; and
a processor (270) electrically connected to the display (210), the acoustic output module (230), and the memory (250),
wherein the processor (270) is configured to:
determine a first volume related to the first display area (311) among a plurality of display areas of the display (210) and a second volume related to the second display area (312) different from the first display area (311) among the plurality of display areas;
display a first execution screen (331) according to execution of a first application on the first display area (311);
configure a volume for outputting first audio data of the first application through the acoustic output module based on the first volume;
detect a first user input for moving the first execution screen (331) from the first display area (311) to the second display area (312);
display the first execution screen (331) on the second display area (312) based on the first user input; and
output the first audio data, based on the second volume, through the acoustic output module (230) or the external electronic device as the first execution screen is displayed on the second display area (312).

2. The electronic device (100) of claim 1, wherein the processor (270) is configured to:
detect a second user input for adjusting the volume of each of the plurality of display areas; and
determine the first volume and the second volume, based on the detected second user input.

3. The electronic device (100) of claim 1 or 2, wherein the processor (270) is configured to:
detect a third user input for adjusting the size of the first display area (311); and
adjust a ratio of the first display area (311) to the entire display area of the display (210), based on the detected third user input.

4. The electronic device (100) of claim 3, wherein the processor (270) is configured to determine the first volume, based on the ratio of the first display area (311) to the entire display area of the display (210).

5. The electronic device (100) of any one of the preceding claims, wherein the processor (270) is configured to configure a volume for outputting, in case that the first execution screen (331) is displayed on the entire display area of the display (210), the first audio data, based on the volume configured in the first application, through the acoustic output module (230).

6. The electronic device (100) of any one of the preceding claims, wherein the processor (270) is configured to:
detect a physical change of the display for extending the entire display area of the display (210);
extend the entire display area of the display (210) in response to the detected physical change of the display; and
determine the plurality of display areas, based on the extended entire display area.

7. The electronic device (100) of claim 6, wherein the processor (270) is configured to:
detect a fourth user input onto the first display area (311);
detect a physical change of the display (210), based on the detected fourth user input;
configure a third display area (313), which is different from the plurality of display areas, in the extended entire display area;
display a third execution screen (333) according to execution of a third application, which is different from the first application and the second application, on the third display area (313); and
output third audio data of the third application based on the first volume, through the acoustic output module (230) or the external electronic device.

8. The electronic device (100) of any one of the preceding claims, wherein the processor (270) is configured to display an object for controlling the first volume on the first display area (311).

9. The electronic device (100) of claim 8, wherein the processor (270) is configured to:
detect a fifth user input to the object;
move the object from the first display area (311) to the second display area (312), based on the detected fifth user input; and
determine the second volume through the moved object.

10. A volume control method comprising:
determining a first volume related to the first display area (311) among a plurality of display areas of the display (210) and a second volume related to the second display area (312) different from the first display area (311) among the plurality of display areas;
displaying a first execution screen (331) a first application on the first display area (311);
configuring a volume for outputting first audio data of the first application through the acoustic output module based on the first volume
detecting a first user input for moving the first execution screen (331) from the first display area (311) to the second display area (312);
displaying the first execution screen (331) on the second display area (312) based on the detected first user input; and
outputting the first audio data, based on the second volume, through the acoustic output module (230) or the external electronic device as the first execution screen is displayed on the second display area (312).

11. The method of claim 10, further comprising:
detecting a second user input for adjusting the volume of each of the plurality of display areas; and
determining the first volume and the second volume, based on the detected second user input.

12. The method of claim 10 or 11, further comprising:
detecting a third user input for adjusting the size of the first display area (311); and
adjusting a ratio of the first display area (311) to the entire display area of the display, based on the detected third user input.

13. The method of claim 12, further comprising determining the first volume, based on the ratio of the first display area (311) to the entire display area of the display (210).

14. The method of any one of claims 10 to 13, further comprising configuring a volume for outputting, in case that the first execution screen is displayed on the entire display area of the display, the first audio data, based on the volume configured in the first application, through the acoustic output module (230).

## Patentansprüche

1. Elektronische Vorrichtung (100), umfassend:
eine Anzeige (210);
ein akustisches Ausgabemodul (230);
einen Speicher (250), der eine Vielzahl von Anwendungen speichert; und
einen Prozessor (270), der elektrisch mit der Anzeige (210), dem akustischen Ausgabemodul (230) und dem Speicher (250) verbunden ist,
wobei der Prozessor (270) konfiguriert ist zum:
Bestimmen einer ersten Lautstärke in Bezug auf den ersten Anzeigebereich (311) aus einer Vielzahl von Anzeigebereichen der Anzeige (210) und einer zweiten Lautstärke in Bezug auf den zweiten Anzeigebereich (312), der sich von dem ersten Anzeigebereich (311) unterscheidet, aus der Vielzahl von Anzeigebereichen;
Anzeigen eines ersten Ausführungsbildschirms (331) entsprechend der Ausführung einer ersten Anwendung auf dem ersten Anzeigebereich (311);
Konfigurieren einer Lautstärke für die Ausgabe erster Audiodaten der ersten Anwendung über das akustische Ausgabemodul basierend auf der ersten Lautstärke;
Erkennen einer ersten Benutzereingabe zum Verschieben des ersten Ausführungsbildschirms (331) vom ersten Anzeigebereich (311) zum zweiten Anzeigebereich (312);
Anzeigen des ersten Ausführungsbildschirms (331) auf dem zweiten Anzeigebereich (312) basierend auf der ersten Benutzereingabe; und
Ausgeben der ersten Audiodateien basierend auf der zweiten Lautstärke über das akustische Ausgabemodul (230) oder die externe elektronische Vorrichtung, wenn der erste Ausführungsbildschirm auf dem zweiten Anzeigebereich (312) angezeigt wird.

2. Elektronische Vorrichtung (100) nach Anspruch 1, wobei der Prozessor (270) konfiguriert ist zum:
Erkennen einer zweiten Benutzereingabe zum Einstellen der Lautstärke jeder der Vielzahl von Anzeigenbereichen; und
Bestimmen der ersten Lautstärke und der zweiten Lautstärke, basierend auf der erkannten zweiten Benutzereingabe.

3. Elektronische Vorrichtung (100) nach Anspruch 1 oder 2, wobei der Prozessor (270) konfiguriert ist zum:
Erkennen einer dritten Benutzereingabe zum Einstellen der Größe des ersten Anzeigebereichs (311); und
Anpassen eines Verhältnisses des ersten Anzeigebereichs (311) zum gesamten Anzeigebereich der Anzeige (210), basierend auf der erkannten dritten Benutzereingabe.

4. Elektronische Vorrichtung (100) nach Anspruch 3, wobei der Prozessor (270) konfiguriert ist, um das erste Volumen basierend auf dem Verhältnis des ersten Anzeigebereichs (311) zum gesamten Anzeigebereich der Anzeige (210) zu bestimmen.

5. Elektronische Vorrichtung (100) nach einem der vorhergehenden Ansprüche, wobei der Prozessor (270) konfiguriert ist, um eine Lautstärke für die Ausgabe der ersten Audiodateien, basierend auf der in der ersten Anwendung konfigurierten Lautstärke, über das akustische Ausgabemodul (230) zu konfigurieren, falls der erste Ausführungsbildschirm (331) auf dem gesamten Anzeigebereich der Anzeige (210) angezeigt wird.

6. Elektronische Vorrichtung (100) nach einem der vorhergehenden Ansprüche, wobei der Prozessor (270) konfiguriert ist zum:
Erkennen einer physikalischen Veränderung der Anzeige, um den gesamten Anzeigebereich der Anzeige (210) zu erweitern;
Erweitern des gesamten Anzeigebereichs der Anzeige (210) als Reaktion auf die erkannte physikalische Veränderung der Anzeige; und
Bestimmen der Vielzahl von Anzeigebereichen, basierend auf dem erweiterten gesamten Anzeigebereich.

7. Elektronische Vorrichtung (100) nach Anspruch 6, wobei der Prozessor (270) konfiguriert ist zum:
Erkennen einer vierten Benutzereingabe auf dem ersten Anzeigebereich (311);
Erkennen einer physikalischen Veränderung der Anzeige (210) basierend auf der erkannten vierten Benutzereingabe;
Konfigurieren eines dritten Anzeigebereichs (313), der sich von der Vielzahl von Anzeigebereichen unterscheidet, in dem erweiterten gesamten Anzeigebereich;
Anzeigen eines dritten Ausführungsbildschirms (333) entsprechend der Ausführung einer dritten Anwendung, die sich von der ersten Anwendung und der zweiten Anwendung unterscheidet, auf dem dritten Anzeigebereich (313); und
Ausgeben dritter Audiodateien der dritten Anwendung basierend auf der ersten Lautstärke über das akustische Ausgabemodul (230) oder die externe elektronische Vorrichtung.

8. Elektronische Vorrichtung (100) nach einem der vorhergehenden Ansprüche, wobei der Prozessor (270) konfiguriert ist, um ein Objekt zum Steuern der ersten Lautstärke auf dem ersten Anzeigebereich (311) anzuzeigen.

9. Elektronische Vorrichtung (100) nach Anspruch 8, wobei der Prozessor (270) konfiguriert ist zum:
Erkennen einer fünften Benutzereingabe für das Objekt;
Verschieben des Objekts basierend auf der erkannten fünften Benutzereingabe von dem ersten Anzeigebereich (311) zu dem zweiten Anzeigebereich (312); und
Bestimmen der zweiten Lautstärke durch das verschobene Objekt.

10. Verfahren zur Steuerung der Lautstärke, umfassend:
Bestimmen einer ersten Lautstärke in Bezug auf den ersten Anzeigebereich (311) aus einer Vielzahl von Anzeigebereichen der Anzeige (210) und einer zweiten Lautstärke in Bezug auf den zweiten Anzeigebereich (312), der sich von dem ersten Anzeigebereich (311) unterscheidet, aus der Vielzahl von Anzeigebereichen;
Anzeigen eines ersten Ausführungsbildschirms (331) einer ersten Anwendung auf dem ersten Anzeigebereich (311);
Konfigurieren einer Lautstärke für die Ausgabe erster Audiodaten der ersten Anwendung über das akustische Ausgabemodul basierend auf der ersten Lautstärke;
Erkennen einer ersten Benutzereingabe zum Verschieben des ersten Ausführungsbildschirms (331) vom ersten Anzeigebereich (311) zum zweiten Anzeigebereich (312);
Anzeigen des ersten Ausführungsbildschirms (331) auf dem zweiten Anzeigebereich (312) basierend auf der erkannten ersten Benutzereingabe; und
Ausgeben der ersten Audiodateien basierend auf der zweiten Lautstärke über das akustische Ausgabemodul (230) oder die externe elektronische Vorrichtung, wenn der erste Ausführungsbildschirm auf dem zweiten Anzeigebereich (312) angezeigt wird.

11. Verfahren nach Anspruch 10, ferner umfassend:
Erkennen einer zweiten Benutzereingabe zum Einstellen der Lautstärke jeder der Vielzahl von Anzeigenbereichen; und
Bestimmen der ersten Lautstärke und der zweiten Lautstärke, basierend auf der erkannten zweiten Benutzereingabe.

12. Verfahren nach Anspruch 10 oder 11, ferner umfassend:
Erkennen einer dritten Benutzereingabe zum Einstellen der Größe des ersten Anzeigebereichs (311); und
Anpassen eines Verhältnisses des ersten Anzeigebereichs (311) zum gesamten Anzeigebereich der Anzeige, basierend auf der erkannten dritten Benutzereingabe.

13. Verfahren nach Anspruch 12, ferner umfassend das Bestimmen der ersten Lautstärke, basierend auf dem Verhältnis des ersten Anzeigebereichs (311) zum gesamten Anzeigebereich der Anzeige (210).

14. Verfahren nach einem der Ansprüche 10 bis 13, ferner umfassend das Konfigurieren einer Lautstärke zur Ausgabe der ersten Audiodateien, basierend auf der in der ersten Anwendung konfigurierten Lautstärke, über das akustische Ausgabemodul (230) für den Fall, dass der erste Ausführungsbildschirm auf dem gesamten Anzeigebereich der Anzeige angezeigt wird.

## Revendications

1. Dispositif électronique (100), comprenant :
un affichage (210) ;
un module de sortie acoustique (230) ;
une mémoire (250) configurée pour stocker une pluralité d'instructions ; et
un processeur (270) relié électriquement à l'affichage (210), au module de sortie acoustique (230) et à la mémoire (250),
dans lequel le processeur (270) est configuré pour :
déterminer un premier volume lié à la première zone d'affichage (311) parmi une pluralité de zones d'affichage de l'affichage (210) et un second volume lié à la seconde zone d'affichage (312) différente de la première zone d'affichage (311) parmi la pluralité de zones d'affichage ;
afficher un premier écran d'exécution (331) en fonction de l'exécution d'une première application sur la première zone d'affichage (311) ;
configurer un volume pour la sortie des premières données audio de la première application à travers le module de sortie acoustique en se basant sur le premier volume ;
détecter une première entrée d'utilisateur pour déplacer le premier écran d'exécution (331) de la première zone d'affichage (311) à la seconde zone d'affichage (312) ;
afficher le premier écran d'exécution (331) sur la seconde zone d'affichage (312) en se basant sur la première entrée d'utilisateur ; et
émettre les premières données audio, en se basant sur le second volume, par l'intermédiaire du module de sortie acoustique (230) ou du dispositif électronique externe lorsque le premier écran d'exécution est affiché sur la seconde zone d'affichage (312).

2. Dispositif électronique (100) de la revendication 1, dans lequel le processeur (270) est configuré pour :
détecter une seconde entrée d'utilisateur pour régler le volume de chacune de la pluralité de zones d'affichage ; et
déterminer le premier volume et le second volume, en se basant sur la seconde entrée d'utilisateur détectée.

3. Dispositif électronique (100) de la revendication 1 ou 2, dans lequel le processeur (270) est configuré pour :
détecter une troisième entrée d'utilisateur permettant de régler la taille de la première zone d'affichage (311) ; et
ajuster un rapport entre la première zone d'affichage (311) et la totalité de la zone d'affichage de l'affichage (210), en se basant sur la troisième entrée d'utilisateur détectée.

4. Dispositif électronique (100) de la revendication 3, dans lequel le processeur (270) est configuré pour déterminer le premier volume, en se basant sur le rapport entre la première zone d'affichage (311) et la totalité de la zone d'affichage de l'affichage (210).

5. Dispositif électronique (100) de l'une quelconque des revendications précédentes, dans lequel le processeur (270) est configuré pour configurer un volume de sortie, dans le cas où le premier écran d'exécution (331) est affiché sur la totalité de la zone d'affichage de l'affichage (210), les premières données audio, basées sur le volume configuré dans la première application, par l'intermédiaire du module de sortie acoustique (230).

6. Dispositif électronique (100) de l'une quelconque des revendications précédentes, dans lequel le processeur (270) est configuré pour :
détecter une modification physique de l'affichage pour étendre la totalité de la zone d'affichage de l'affichage (210) ;
étendre la totalité de la zone d'affichage de l'affichage (210) en réponse à la modification physique détectée de l'affichage ; et
déterminer la pluralité de zones d'affichage, en se basant sur la totalité de la zone d'affichage étendue.

7. Dispositif électronique (100) de la revendication 6, dans lequel le processeur (270) est configuré pour :
détecter une quatrième entrée d'utilisateur sur la première zone d'affichage (311) ;
détecter une modification physique de l'affichage (210), en se basant sur la quatrième entrée d'utilisateur détectée ;
configurer une troisième zone d'affichage (313), différente de la pluralité de zones d'affichage, dans la totalité de la zone d'affichage étendue ;
afficher un troisième écran d'exécution (333) en fonction de l'exécution d'une troisième application, différente de la première application et de la seconde application, sur la troisième zone d'affichage (313) ; et
émettre les troisièmes données audio de la troisième application en se basant sur le premier volume, par l'intermédiaire du module de sortie acoustique (230) ou du dispositif électronique externe.

8. Dispositif électronique (100) de l'une quelconque des revendications précédentes, dans lequel le processeur (270) est configuré pour afficher un objet permettant de commander le premier volume sur la première zone d'affichage (311).

9. Dispositif électronique (100) de la revendication 8, dans lequel le processeur (270) est configuré pour :
détecter une cinquième entrée d'utilisateur dans l'objet ;
déplacer l'objet de la première zone d'affichage (311) vers la seconde zone d'affichage (312), en se basant sur la cinquième entrée d'utilisateur détectée ; et
déterminer le second volume par le biais de l'objet déplacé.

10. Procédé de commande de volume comprenant :
déterminer un premier volume lié à la première zone d'affichage (311) parmi une pluralité de zones d'affichage de l'affichage (210) et un second volume lié à la seconde zone d'affichage (312) différente de la première zone d'affichage (311) parmi la pluralité de zones d'affichage ;
afficher un premier écran d'exécution (331) d'une première application sur la première zone d'affichage (311) ;
configurer un volume pour la sortie des premières données audio de la première application à travers le module de sortie acoustique en se basant sur le premier volume ;
détecter une première entrée d'utilisateur pour déplacer le premier écran d'exécution (331) de la première zone d'affichage (311) à la seconde zone d'affichage (312) ;
afficher le premier écran d'exécution (331) sur la seconde zone d'affichage (312) en se basant sur la première entrée d'utilisateur détectée ; et
émettre les premières données audio, en se basant sur le second volume, par l'intermédiaire du module de sortie acoustique (230) ou du dispositif électronique externe lorsque le premier écran d'exécution est affiché sur la seconde zone d'affichage (312).

11. Procédé de la revendication 10, comprenant en outre :
détecter une seconde entrée d'utilisateur pour régler le volume de chacune de la pluralité de zones d'affichage ; et
déterminer le premier volume et le second volume, en se basant sur la seconde entrée d'utilisateur détectée.

12. Procédé de la revendication 10 ou 11, comprenant en outre :
détecter une troisième entrée d'utilisateur permettant de régler la taille de la première zone d'affichage (311) ; et
ajuster un rapport entre la première zone d'affichage (311) et la totalité de la zone d'affichage de l'affichage, en se basant sur la troisième entrée d'utilisateur détectée.

13. Procédé de la revendication 12, comprenant en outre la détermination du premier volume, en se basant sur le rapport entre la première zone d'affichage (311) et la totalité de la zone d'affichage de l'affichage (210).

14. Procédé de l'une quelconque des revendications 10 à 13, comprenant en outre la configuration d'un volume pour émettre, dans le cas où le premier écran d'exécution est affiché sur la totalité de la zone d'affichage de l'affichage, les premières données audio, basées sur le volume configuré dans la première application, par l'intermédiaire du module de sortie acoustique (230).
